# EUROPÄISCHE PATENTSCHRIFT

(11) **EP 3 670 893 B1**
(45) Veröffentlichungstag und Bekanntmachung des Hinweises auf die Patenterteilung: **29.09.2021**
(21) Anmeldenummer: 19192122.0
(22) Anmeldetag: 16.08.2019
(51) Int. Cl.: F02M 21/02, F02M 21/04, F02M 31/00, F02M 31/02, F02M 31/04, F02M 31/12

(54) **VERFAHREN ZUM BETRIEB EINES GASMOTORS MIT EINEM WENIGER ALS 20 VOL-% METHAN ENTHALTENEN SCHWACHGAS SOWIE GASMOTORANORDNUNG**
A GAS ENGINE, ARRANGEMENT AND METHOD FOR OPERATING A GAS ENGINE WITH A WEAK GAS CONTAINING LESS THAN 20 VOL- % METHANE
PROCÉDÉ DE FONCTIONNEMENT D'UN MOTEUR À GAZ AVEC UN GAZ PAUVRE CONTENANT MOINS DE 20% EN VOLUME DE MÉTHANE AINSI QUE DISPOSITIF MOTEUR À GAZ

(30) Priorität: 17.12.2018 DE 102018132469
(43) Veröffentlichungstag der Anmeldung: 24.06.2020
(73) Patentinhaber: Green Gas Germany GmbH, 47803 Krefeld (DE)
(72) Erfinder: Bestvater, Stefan, 50226 Frechen (DE); van Egeren, Dirk, 47475 Kamp-Lintfort (DE)
(74) Vertreter: Andrejewski - Honke Patent- und Rechtsanwälte Partnerschaft mbB

(56) Entgegenhaltungen:
- EP-A1- 3 255 272
- DE-A1- 4 321 893
- DE-A1- 10 047 262
- DE-A1-102011 050 802
- DE-U1- 29 714 887
- US-A1- 2016 369 719

## Beschreibung

Die Erfindung betrifft ein Verfahren zum Betrieb eines Gasmotors mit einem weniger als 20 Vol.-% Methan enthaltenden, insbesondere sauerstofffreien, Schwachgas. Das Schwachgas wird in zumindest einem Venturi-Mischer unter Bildung eines Gemischs mit einem Zuluftstrom vermischt. Das Gemisch wird dem Gasmotor als Treibstoff zugeführt.

Zur Verstromung von methanhaltigen Brenngasen sind allgemein Gasmotoren bekannt. Dabei handelt es sich im Allgemeinen um großvolumige Hubkolbenmotoren, welche nach dem Otto-Kreisprozess arbeiten. Bei der Verwendung von gasförmigem Brennstoff ist eine besonders gute Gemischbildung möglich, welche im Vergleich zu flüssigen Brennstoffen, wie beispielsweise Rohöldestillaten zu einer gleichmäßigen und schadstoffarmen Verbrennung führt. Gasmotoren zeichnen sich durch einen hohen Wirkungsgrad aus und können insbesondere im Rahmen der Kraft-Wärme-Kopplung in sogenannten Blockheizkraftwerken eingesetzt werden.

Übliche Aggregate für Blockheizkraftwerke können eine elektrische Leistung im Bereich von 1 bis 2 MW erreichen. Ihr Gesamtwirkungsgrad bei der Ausnutzung von elektrischer Energie und der Abwärme beträgt regelmäßig mehr als 95 % des mit dem Brenngas eingesetzten Brennwertes. Als Energieträger dient dabei üblicherweise hochwertiges Erdgas aus dem öffentlichen Gasnetz.

Derartige Motoren sind zur Nutzung von Schwachgasen nur bedingt geeignet. Bei Schwachgasen handelt es sich um Brenngasgemische, bei denen die brennbaren Gase wie Methan oder andere gasförmige Kohlenwasserstoffe, Wasserstoff- und Kohlenmonoxid mit nicht brennbaren Komponenten wie Stickstoff, Kohlendioxid oder Wasserdampf verdünnt sind. Sauerstoff ist in diesem Schwachgas nicht oder allenfalls in Spuren von weniger als 1 %, insbesondere weniger als 1 %o enthalten. Derartige Schwachgase fallen häufig bei biologischen Zersetzungsprozessen als Klärgas oder Deponiegas bzw. als Ausdünstungen von Bergwerken als sogenanntes Grubengas an. Das Aufkommen dieser Gase sowie der darin enthaltene Brennwert rechtfertigen aus wirtschaftlichen Gründen weder ein Aufkonzentrieren noch ein Transport, so dass eine Behandlung vor Ort erfolgen muss. Aufgrund der Toxizität und/oder klimaschädlicher Eigenschaften der Gasgemische kommt ein unkontrolliertes Entweichen in die Atmosphäre nicht in Betracht. Auch ein einfaches Abfackeln oder eine thermische Verwertung ist wirtschaftlich nur in Verbindung mit einem entsprechenden Wärmebedarf sinnvoll.

Vor diesem Hintergrund gibt es bereits Ansätze, Gasmotoren mit Schwachgasen zu betreiben. Problematisch hierbei ist jedoch, dass gängige Gasmotoren zum Betrieb einen gewissen Brennwert im Brenngas voraussetzen. Brenngase mit einem Methananteil von weniger als 30 % sind allgemein nicht für gängige Gasmotoren geeignet, da hieraus mit den üblichen Mitteln kein hinreichen zündfähiges und/oder energiehaltiges Gemisch gebildet werden kann.

Aus DE 100 47 262 A1 ist ein Verfahren bekannt, bei dem der Methananteil eines Schwachgases durch Abscheidung von Inertgasen in einer Membrantrennanlage erhöht wird.

In DE 297 14 887 U1 wird der Brennwert eines Schwachgases durch Hinzufügen eines Starkgases verbessert.

Aus DE 43 21 893 A1 ist eine Vorrichtung zur Gemischbildung für einen Verbrennungsmotor bekannt. Dabei werden zueinander ergänzend sowohl ein gasförmiger als auch ein flüssiger Kraftstoff verwendet. Der flüssige Kraftstoff wird durch thermische Verdampfung in einen gasförmigen Aggregatzustand überführt.

Aus EP 3 255 272 A1 ist ein Biogas-Motor bekannt, bei dem das zugeführte Biogas durch eine Erwärmungsvorrichtung oberhalb des Taupunkts gehalten wird.

US 2016/0 369 719 A1 beschreibt ein Verfahren, um einen Dieselmotor aus einem abgewrackten Fahrzeug als stationäres Aggregat zur Stromerzeugung alternativ mit Diesel oder Flüssiggas als Treibstoff zu verwenden.

Zur Verwendung von niedriger methanhaltigem Schwachgas ist bereits aus DE 10 2011 050 802 A1 ein Verfahren bekannt, bei dem die Gemischbildung über zwei in Reihe geschaltete Venturi-Mischer erfolgt. Mit einem sogenannten Tandem-Mischer ist es möglich, einen Gasmotor mit einem Schwachgas zu betreiben, welche lediglich ein Methananteil von 22 Vol.-% aufweist.

Bei noch niedrigeren Methangehalten ist ein Betrieb jedoch nicht mehr möglich. Insbesondere unterhalb von 20 Vol.-% Methananteil ist der Gasmotor nicht mehr lauffähig.

Vor diesem Hintergrund liegt der Erfindung die Aufgabe zugrunde ein Verfahren anzugeben, mit dem ein konventioneller Gasmotor auch mit einem Schwachgas betrieben werden kann, welches eine Methankonzentration von weniger als 20 Vol.-% aufweist. Hierdurch soll das ungenutzte Abfackeln von Grubengasen, Klärgasen und Deponiegasen vermieden werden, welche den bisher notwendigen Brenngaskonzentrationen nicht entsprechen.

Gegenstand der Erfindung und Lösung dieser Aufgabe ist ein Verfahren nach Patentanspruch 1 sowie eine Gasmotoranordnung nach Patentanspruch 10. Bevorzugte Ausgestaltungen sind jeweils in den abhängigen Unteransprüchen angegeben.

Erfindungsgemäß ist vorgesehen, dass das Gemisch vor dem Eintritt in den Gasmotor auf eine Temperatur zwischen 120 °C und 150 °C vorgewärmt wird. Bei Verbrennungsmotoren ist es grundsätzlich üblich, zur Erhöhung der Energieausbeute und zur Verbesserung der Leistung die Zuluft, den Brennstoff und/oder das daraus gebildete Gemisch dem Kreisprozess mit einer möglichst geringeren Temperatur zuzuführen. Entsprechend sind bei bekannten Motoranordnungen, insbesondere mit Turboaufladung, häufig Gemischkühler bzw. Ladeluftkühler vorgesehen, um ein möglichst niedriges Temperaturniveau anzustreben. Die vorliegende Erfindung beschäftigt sich jedoch nicht mit der Leistungssteigerung eines bestehenden Kreisprozesses, sondern mit der Ermöglichung des Motorenbetriebs trotz eines gering brennwertigen Schwachgases als Treibstoff. Im Rahmen der Erfindung hat sich hierbei gezeigt, dass überraschenderweise ein konventioneller Gasmotor - welcher für den Betrieb mit hochwertigem Erdgas ausgelegt ist - auch mit einem Schwachgas mit Methananteilen von weniger als 20 Vol.-% betrieben werden kann. Die durch die Vorwärmung und die Verwendung eines geringbrennwertigen Schwachgases entstehende Leistungsminderung wird dabei durch die Tatsache aufgewogen, dass überhaupt eine Verwertung mit der Erzeugung elektrischer Energie realisiert werden kann.

Gemäß einer bevorzugten Ausgestaltung wird auch der Zuluftstrom vor dem Eintritt in den Venturi-Mischer vorgewärmt. Durch die Vorwärmung des Luftanteils erfährt dieser bei gleicher Masse eine Volumenausdehnung. Der Arbeitsbereich, in denen der Venturi-Mischer funktioniert, wird durch bestimmte Mischungsverhältnisse der Volumenströme bestimmt. Wenn das Volumen des Zuluftstromes durch Erwärmung zusätzlich vergrößert wurde, kann der Venturi-Mischer ein besseres Masseverhältnis des Schwachgases zur Zuluft herstellen. Dies verbessert ebenfalls die Zündfähigkeit und den Energiegehalt des Gemischs.

Bevorzugt weist der Zuluftstrom bei Eintritt in den Venturi-Mischer eine Temperatur zwischen 35 °C und 50 °C auf. Eine derartige Vorwärmung ist bereits ausreichend, um eine signifikante Verbesserung des Gemischs zu erzielen. Mit einer Vorwärmung in diesem Bereich wird ebenfalls bereits die anschließende Gemischvorwärmung vereinfacht.

Gemäß einer bevorzugten Ausgestaltung wird der Zuluftstrom mittels eines elektrischen Vorheizregisters vorgewärmt. Dieses ist leicht regelbar und kann problemlos in eine bestehende Anlage integriert werden. Die elektrische Energie des Vorheizregisters wird vorzugsweise durch einen mit dem Gasmotor angetriebenen Generator bereitgestellt.

Alternativ oder zusätzlich kann der Zuluftstrom durch Wärmeaustausch mit einem Abgasstrom des Gasmotors vorgewärmt werden. Hierzu kann ein Wärmetauscher in den Zuluftweg integriert werden, welcher durch zumindest einen Teil des Abgasstromes oder ein mittels des Abgases erwärmten Wärmemediums durchströmt wird. In einer besonders einfachen Ausgestaltung ist ein Teil der Abgasleitung in der Nähe der Zuluftführung angeordnet. Gemäß einer besonders bevorzugten Ausgestaltung der Erfindung ist der Venturi-Mischer als Tandem-Mischer ausgebildet. Der Tandem-Mischer umfasst einen ersten Venturi-Gasmischer, dem ein erster Teilstrom des Schwachgases sowie der Zuluftstrom als Treibstrahl zugeführt wird. In dem ersten Venturi-Gasmischer wird somit ein erstes Vorgemisch gebildet. Ferner ist in dem Tandem-Mischer ein zweiter Venturi-Gasmischer vorgesehen, dem ein zweiter Teilstrom des Schwachgases und das erste Vorgemisch als Treibstrahl zugeführt wird. Das Mischungsverhältnis zwischen dem jeweiligen Treibstrahl und dem zugeordneten Teilstrom des Schwachgases lässt sich in dem ersten Ventruri-Gasmischer und dem zweiten Venturi-Gasmischer einstellen. Vorzugsweise sind die Einstellmischer des ersten Venturi-Gasmischers und des zweiten Venturi-Gasmischers miteinander mechanisch gekoppelt und an eine Motorsteuerung des Gasmotors angeschlossen. Durch die Verwendung eines Tandem-Mischers kann das Mischungsverhältnis zwischen dem Schwachgas und dem Zuluftstrom in einem größeren Bereich eingestellt werden. Bezüglich des detaillierten Aufbaus des Tandem-Mischers wird auf DE 10 2011 050 802 A1 der Anmelderin verwiesen.

Vorzugsweise ist vorgesehen, dass in das Gemisch ein Anteil des Schwachgases eingedüst wird. Die das Schwachgas zuführende Schwachgasleitung ist somit direkt über eine Förderleitung mit einer den Venturi-Mischer mit dem Gasmotor verbindenden Gemischleitung verbunden. Die Förderleitung kann mit Regel- und/oder Förderorganen versehen sein, welche den Durchfluss der Schwachgaseindüsung steuern. Hierdurch kann - generell oder in Abhängigkeit von dem Betriebszustand - eine zusätzliche Schwachgasmenge dem Gemisch zugeführt werden.

In einer besonders bevorzugten Ausgestaltung wird das Gemisch in einem Verdichter eines Abgasturboladers vorverdichtet. Die Eindüsung erfolgt dabei zweckmäßigerweise vor dem Eintritt in den Verdichter. Somit kann zur Förderung durch die Förderleitung auch vor dem Verdichter entstehender Unterdruck genutzt werden.

Unabhängig von einer optionalen Eindüsung kann ein Verdichter eines Abgasturboladers, welcher das aus dem Venturi-Mischer austretende Gemisch vor der Zuführung zum Gasmotor verdichtet, auch zur Vorwärmung des Gemischs genutzt werden. Bei der adiabatischen Kompression von Gasen steigt deren Temperatur an. Um diesen Effekt zu kompensieren sind bei aufgeladenen Motoren (Turbomotoren) üblicherweise Ladeluftkühler vorgesehen, welche bei Eintritt in den Motor eine günstige, niedrigere Temperatur einstellen. Da im Rahmen der vorliegenden Erfindung eine besonders hohe Eintrittstemperatur am Gasmotor gewünscht ist, werden vorzugsweise bestehende Kühlapparaturen gedrosselt, außer Betrieb gesetzt oder ganz entfernt. So findet gemäß einer bevorzugten Ausgestaltung der Erfindung zwischen dem Austritt des Verdichters und dem Eintritt des Gasmotors keine aktive Kühlung des Gemischs statt.

Vorzugsweise wird der Zuluftstrom durch ein Drosselorgan beschränkt, insbesondere gesteuert. Das Drosselorgan erhöht den Strömungswiderstand innerhalb des Zuluftweges, so dass bei einem bestimmten Unterdruck - welcher beispielsweise durch ein Turbolader hervorgerufen wird - weniger Zuluft und mehr Schwachgas angesaugt wird. Vorzugsweise ist das Drosselorgan steuerbar, das heißt der Strömungswiderstand kann - insbesondere in Abhängigkeit von der Motorsteuerung - eingestellt werden.

Gegenstand der Erfindung ist auch eine Gasmotoranordnung zur Verwendung eines Schwachgases mit einem Methananteil von weniger als 20 Vol.-%. Die Gasmotoranordnung umfasst einen Venturi-Mischer, insbesondere einen Tandem-Mischer zur Bildung eines Gemischs aus dem Schwachgas und einem Zuluftstrom, welcher an eine das Schwachgas führende Schwachgasleitung und an eine den Zuluftstrom führende Zuluftleitung angeschlossen ist. Weiterhin ist ein Gasmotor vorgesehen, wobei der Venturi-Mischer mit einer Gemischleitung an einen Einlass des Gasmotors angeschlossen ist. Erfindungsgemäß ist in der Gemischleitung eine Vorwärmeinrichtung zur Vorwärmung des Gemischs angeordnet. Die Vorwärmeinrichtung ist so ausgebildet, dass das in den Gasmotor eintretende Gemisch auf eine Temperatur von 120 °C und 150 °C vorgewärmt werden kann.

Gemäß einer bevorzugten Ausgestaltung ist in der Zuluftleitung eine Heizrichtung zur Vorwärmung des Zuluftstroms angeordnet. Mit dieser lässt sich der Zuluftstrom bei Eintritt in den Venturi-Mischer auf eine Temperatur zwischen 35 °C und 50 °C vorwärmen. Vorzugsweise umfasst die Heizeinrichtung ein elektrisches Heizregister.

Alternativ oder zusätzlich kann die Heizeinrichtung eine Wärmetauscheinrichtung umfassen, welche mit einem den Gasmotor verlassenden Abgasstrom wechselwirkt. Die Wärmetauscheinrichtung ist dabei direkt mit der Abgasführung verbunden oder an diese mittels einer ein Wärmetauschermedium enthaltenen Leitung gekoppelt.

Vorzugsweise ist die Schwachgasleitung mit der Gemischleitung durch eine Förderleitung zur direkten Eindüsung von Schwachgas in das Gemisch verbunden. Die Förderleitung kann ein regelbares Drosselventil und/oder eine Fördereinrichtung zur Einstellung der eingedüsten Schwachgasmenge enthalten.

Gemäß einer besonders bevorzugten Ausgestaltung ist in der Gemischleitung ein Verdichter eines Abgasturboladers angeordnet. Der Verdichter des Abgasturboladers wird dabei von einer Abgasturbine angetrieben, welche an eine Abgasleitung des Gasmotors angeschlossen ist. Das den Gasmotor verlassende Abgas strömt durch die Abgasleitung in die Abgasturbine und stellt somit die notwendige Energie zum Betrieb des Verdichters bereit.

Eine etwaig vorgesehene Förderleitung ist bevorzugt stromauf des Verdichters mit der Gemischleitung verbunden. Somit kann im Betrieb ein durch den Verdichter erzeugter Unterdruck zur Förderung des zusätzlich eingedüsten Schwachgases verwendet werden.

Zweckmäßigerweise ist in der Zuluftleitung ein Drosselorgang angeordnet. Mit dem Drosselorgan kann der Strömungswiderstand der Zuluftleitung entweder statisch oder dynamisch in Abhängigkeit vom Betriebszustand des Gasmotors eingestellt werden.

Gegenstand der Erfindung ist auch ein Verfahren zum Nachrüsten einer bestehenden Gasmotoranordnung. Die bestehende Gasmotoranordnung umfasst einen Venturi-Gasmischer, welcher an eine Zuluftführung und an eine Brenngasführung angeschlossen ist und dessen Ausgang mittels einer Gemischleitung mit dem Einlass des Gasmotors verbunden ist. Das erfindungsgemäße Verfahren eignet sich insbesondere zur Nachrüstung großvolumiger Hubkolbengasmotoren mit einem Hubraum von zumindest 50 f. Erfindungsgemäß wird die Gemischleitung dabei so angepasst, dass das in dem Venturi-Mischer gebildete Gemisch im Betrieb mit einer Temperatur zwischen 120 °C und 150 °C dem Gasmotor zugeführt wird.

Gemäß einer bevorzugten Ausgestaltung weist der Gasmotor in der Grundfiguration einen Abgasturbolader auf. Dieser umfasst zumindest einen in der Gemischleitung angeordneten Verdichter und eine in einer Abgasleitung angeordnete Abgasturbine zum Antrieb des Verdichters. Ferner ist in der Gemischleitung zwischen dem Auslass des Verdichters und dem Einlass des Gasmotors ein Gemischkühler vorgesehen. Gemäß der bevorzugten Ausgestaltung der Erfindung wird im Rahmen der Nachrüstung der Gemischkühler so verändert, dass sich die erfindungsgemäße Eintrittstemperatur des Gemischs im Gasmotor beim Betrieb einstellt.

Insbesondere ist vorgesehen, dass innerhalb des Gemischkühlers angeordnete Kühllamellen entfernt werden. Hierdurch wird nicht nur die Wirkung des Gemischkühlers herabgesetzt, sondern auch der Strömungswiderstand in der Gemischleitung verringert.

Alternativ oder zusätzlich kann im Rahmen der Nachrüstung ein mit dem Gemichkühler verbundener Kühlmittelkreislauf unterbunden werden. Dieser ist im Rahmen des erfindungsgemäßen Verfahrens nicht notwendig.

Weiterhin wird im Rahmen der Nachrüstung vorteilhafterweise eine Förderleitung zwischen der Schwachgaszuleitung und der Gemischleitung zur direkten Eindüsung von Schwachgas installiert.

Zur Verbesserung des Mischungsverhältnisses zwischen dem Schwachgas und der Zuluft kann in der Zuluftleitung ein Drosselorgan- und/oder eine Heizeinrichtung eingebaut werden.

Die Erfindung wird nachfolgend anhand einer lediglich ein Ausführungsbeispiel darstellenden Zeichnung erläutert. Diese zeigt schematisch:

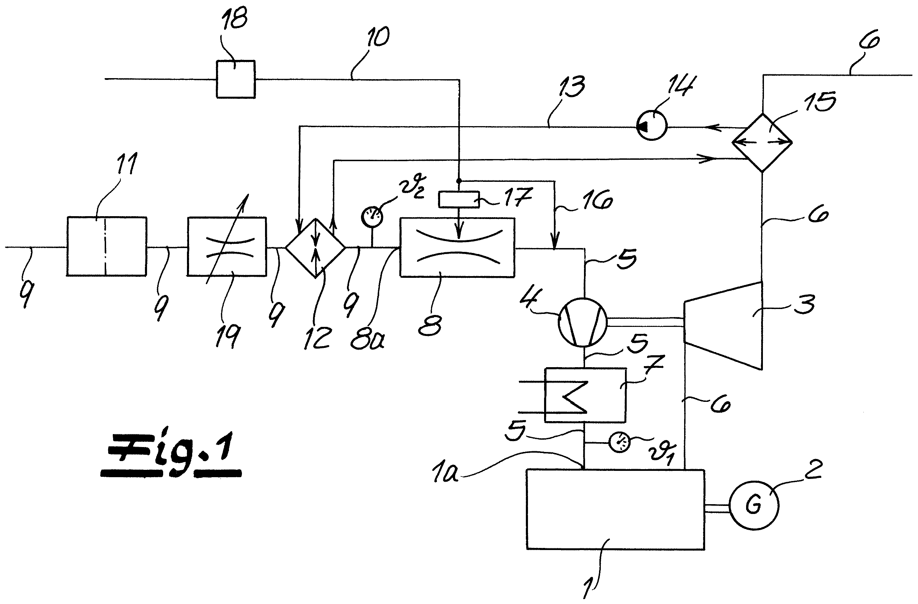

- Fig. 1: ein Fließdiagramm einer erfindungsgemäßen Gasmotoranordnung.

Die Fig. 1 zeigt anhand eines Fließdiagramms eine erfindungsgemäße Gasmotoranordnung, welche nach einer erfindungsgemäßen Nachrüstung zur Durchführung des erfindungsgemäßen Verfahrens eingerichtet ist. In der ursprünglichen Konfiguration weist die Gasmotoranordnung einen Gasmotor 1 auf, welcher mit einem Generator 2 zur Bereitstellung elektrischer Energie gekoppelt ist. Im Ausführungsbeispiel handelt es sich bei dem Gasmotor 1 um einen aufgeladenen Hubkolbenmotor mit 16 Zylindern und einem Gesamthubraum von ca. 70 l. Die Aufladung erfolgt über einen Turbolader, welcher eine Abgasturbine 3 sowie einen hierdurch angetriebenen Verdichter 4 aufweist. Der Verdichter 4 ist einer mit dem Einlass 1a des Gasmotors verbundenen Gemischleitung 5 angeordnet, während die Abgasturbine 3 innerhalb einer Abgasleitung 6 angeordnet ist. Zur Bereitstellung einer geeignet niedrigen Einlasstemperatur ϑ₁ an dem Einlass 1a des Gasmotors 1 ist in der Grundkonfiguration ein Gemischkühler 7 vorgesehen. Das Gemisch wird in einem Venturi-Mischer 8, vorzugsweise einem Tandem-Mischer gebildet, welcher an eine Zuluftleitung 9 sowie eine als Brenngasleitung fungierende Schwachgasleitung 10 angeschlossen ist.

Erfindungsgemäß ist die Gasmotoranordnung so ausgebildet, dass die Einlasstemperatur ϑ₁, mit der das Gemisch in der Gemischleitung 5 in den Einlass 1a des Motors 1 gelangt, zwischen 120 °C und 150 °C liegt. Hierzu ist bei einer Umrüstung der Gasmotoranlage gegenüber der Ursprungskonfiguration die Leistungsfähigkeit des Gemischkühlers 7 herabgesetzt worden. Vorzugsweise kann der Gemischkühler 7 vollständig außer Betrieb gesetzt werden. Alternativ kann der Gemischkühler 7 auch aus der Gemischleitung 5 entfernt werden.

In der Zuluftleitung 9 ist im gezeigten Ausführungsbeispiel ansaugseitig zuerst ein Luftfilter 11 vorgesehen. Der Zuluftstrom wird dabei vor dem Eintritt in den Einlass 8a des Venturi-Mischers durch einen Wärmetauscher 12 auf eine Eintrittstemperatur ϑ₂ zwischen 35 °C und 50 °C vorgewärmt. Im gezeigten Ausführungsbeispiel wird der Wärmetauscher 12 durch einen Wärmeträgerkreislauf 13 erwärmt, welcher durch eine Pumpe 14 angetrieben wird. Das Wärmeträgermedium wird dabei in einem Abgaswärmetauscher 15 erwärmt, welcher an die Abgasleitung 6 des Motors 1 angeschlossen ist. Vorzugsweise wird die Förderleistung der Pumpe 14 in Abhängigkeit von der gemessenen Eintrittstemperatur ϑ₂ so geregelt, dass am Eintritt in den Einlass 8a der Venturi-Mischer 8 die gewünschte Temperatur erreicht wird.

Alternativ oder zusätzlich zu dem Wärmetauscher 12 kann auch ein elektrisches Vorheizregister in den Zuluftweg 9 integriert sein. Dieses wird dann besonders bevorzugt von der elektrischen Energie des Generators 2 gespeist.

Weiterhin ist die Schwachgasleitung 10 mit der Gemischleitung 5 durch eine Förderleitung 16 zur direkten Eindüsung von Schwachgas in das Gemisch verbunden. Die Förderleitung 16 zweigt dabei von der Schwachgasleitung 10 vor einem Nulldruckregler 17 ab, welcher den Druck des zugeführten Schwachgases auf Atmosphärendruck herunterregelt. Hierdurch kann das zusätzliche Schwachgas über die Förderleitung 16 mit einem geringen Überdruck von ca. 100 mbar eingedüst werden. Eine zusätzliche Pumpe innerhalb der Förderleitung 16 ist daher nicht notwendig. Aus Sicherheitsgründen sieht die Schwachgasleitung 10 im Ausführungsbeispiel eine Flammensicherung 18 vor. Diese verhindert im Havariefall ein Zurückschlagen etwaiger Flammen in die Schwachgasquelle.

In dem dargestellten Ausführungsbeispiel ist ferner innerhalb der Zuluftleitung 9 ein Drosselorgan 19 vorgesehen. Durch die gesteuerte Drosselung des Zuluftstromes kann im Zusammenspiel mit dem durch den Verdichter 4 erzeugten Unterdruck das Mischungsverhältnis zwischen Zuluft und Schwachgas zusätzlich angefettet werden.

## Patentansprüche

1. Verfahren zum Betrieb eines Gasmotors (1) mit einem Schwachgas, wobei das Schwachgas in zumindest einem Venturi-Mischer (8) unter Bildung eines Gemischs mit einem Zuluftstrom vermischt wird, und wobei das Gemisch dem Gasmotor (1) als Treibstoff zugeführt wird, **dadurch gekennzeichnet, dass** das Schwachgas weniger als 20 Vol.-% Methan enthält und dass das Gemisch vor dem Eintritt in den Gasmotor (1) auf eine Temperatur (ϑ₁) zwischen 120 °C und 150 °C vorgewärmt wird.

2. Verfahren nach Anspruch 1, **dadurch gekennzeichnet, dass** der Zuluftstrom vor dem Eintritt in den Venturi-Mischer (8) vorgewärmt wird.

3. Verfahren nach Anspruch 2, **dadurch gekennzeichnet, dass** der Zuluftstrom bei Eintritt in den Venturi-Mischer (8) eine Temperatur (ϑ₂) von 35 °C bis 50 °C aufweist.

4. Verfahren nach Anspruch 2 oder 3, **dadurch gekennzeichnet, dass** der Zuluftstrom mittels eines elektrischen Vorheizregisters vorgewärmt wird.

5. Verfahren nach einem der Ansprüche 1 bis 4, **dadurch gekennzeichnet, dass** der Zuluftstrom durch Wärmeaustausch mit einem Abgasstrom des Gasmotors (1) vorgewärmt wird.

6. Verfahren nach einem der Ansprüche 1 bis 5, **dadurch gekennzeichnet, dass** der Venturi-Mischer (8) als Tandemmischer ausgebildet ist.

7. Verfahren nach einem der Ansprüche 1 bis 6, **dadurch gekennzeichnet, dass** in das Gemisch ein Anteil des Schwachgases eingedüst wird.

8. Verfahren nach Anspruch 7, **dadurch gekennzeichnet, dass** das Gemisch in einem Verdichter (4) eines Abgasturboladers (3, 4) vorverdichtet wird und dass die Eindüsung vor dem Eintritt in den Verdichter (4) erfolgt.

9. Verfahren nach einem der Ansprüche 1 bis 8, **dadurch gekennzeichnet, dass** der Zuluftstrom durch ein Drosselorgan (19) beschränkt, insbesondere gesteuert wird.

10. Gasmotoranordnung, welche nach dem Verfahren nach einem der Ansprüche 1 bis 9 mit einem Schwachgas betrieben wird, mit einem Venturi-Mischer (8), insbesondere einem Tandemmischer, zur Bildung eines Gemischs aus dem Schwachgas und einem Zuluftstrom, welcher an eine das Schwachgas führende Schwachgasleitung (10) und an eine den Zuluftstrom führende Zuluftleitung (9) angeschlossen ist, und mit einem Gasmotor (1), wobei der Venturi-Mischer (8) mit einer Gemischleitung (5) an einen Einlass (1a) des Gasmotors (1) angeschlossen ist, **dadurch gekennzeichnet, dass** die Gasmotoranordnung mit einem Schwachgas mit einem Methananteil von weniger als 20 Vol.-% betrieben wird und dass in der Gemischleitung (5) ein Vorwärmeinrichtung (4) zur Vorwärmung des Gemischs auf eine Temperatur (ϑ₁) zwischen 120 °C und 150 °C angeordnet ist.

11. Gasmotoranordnung nach Anspruch 10, **dadurch gekennzeichnet, dass** in der Zuluftleitung (9) eine Heizeinrichtung (12) zur Vorwärmung des Zuluftstroms angeordnet ist.

12. Gasmotoranordnung nach Anspruch 11, **dadurch gekennzeichnet, dass** die Heizeinrichtung (12) ein elektrisches Heizregister ist.

13. Gasmotoranordnung nach Anspruch 11, **dadurch gekennzeichnet, dass** die Heizeinrichtung (12) eine mit einem den Gasmotor (1) verlassenden Abgasstrom (6) wechselwirkende Wärmetauscheinrichtung (12, 13, 14, 15) ist.

14. Gasmotoranordnung nach einem der Ansprüche 10 bis 13, **dadurch gekennzeichnet, dass** die Schwachgasleitung (10) mit der Gemischleitung (5) durch eine Förderleitung (16) zur direkten Eindüsung von Schwachgas in das Gemisch verbunden ist.

15. Gasmotoranordnung nach einem der Ansprüche 10 bis 14, **dadurch gekennzeichnet, dass** in der Gemischleitung (5) ein Verdichter (4) eines Abgasturboladers (3, 4) angeordnet ist.

16. Gasmotoranordnung nach Anspruch 14 und 15, **dadurch gekennzeichnet, dass** die Förderleitung (16) stromauf des Verdichters (4) mit der Gemischleitung (5) verbunden ist.

17. Gasmotoranordnung nach Anspruch 15 oder 16, **dadurch gekennzeichnet, dass** die Vorwärmeinrichtung den Verdichter (4) umfasst.

18. Gasmotoranordnung nach einem der Ansprüche 10 bis 17, **dadurch gekennzeichnet, dass** in der Zuluftleitung (9) ein Drosselorgan (19) angeordnet ist.

## Claims

1. A method for operating a gas engine (1) with a lean gas, wherein the lean gas is mixed with an air inflow in at least one Venturi mixer (8) so as to form a mixture, and wherein the mixture is fed to the gas engine (1) as fuel, **characterized in that** the lean gas contains less than 20% by volume of methane and **in that** the mixture is preheated to a temperature (ϑ₁) between 120°C and 150°C before entering the gas engine (1).

2. The method according to claim 1, **characterized in that** the air inflow is preheated before entering the Venturi mixer (8).

3. The method according to claim 2, **characterized in that** the air inflow has a temperature (ϑ₂) of 35 °C to 50 °C when it enters the Venturi mixer (8).

4. The method according to claim 2 or 3, **characterized in that** the air inflow is preheated by means of an electric preheating register.

5. The method according to one of claims 1 to 4, **characterized in that** the air inflow is preheated by heat exchange with an exhaust gas flow of the gas engine (1) .

6. The method according to one of claims 1 to 5, **characterized in that** the Venturi mixer (8) is configured as a tandem mixer.

7. The method according to one of claims 1 to 6, **characterized in that** a part of the lean gas is injected into the mixture.

8. The method according to claim 7, **characterized in that** the mixture is pre-compressed in a compressor (4) of an exhaust gas turbocharger (3, 4) and **in that** injection occurs prior to its entry into the compressor (4).

9. The method according to one of claims 1 to 8, **characterized in that** the air inflow is restricted, in particular controlled, by means of a throttle member (19) .

10. Gas engine arrangement operated with a lean gas according to the method according to one of claims 1 to 9, comprising a Venturi mixer (8), in particular a tandem mixer, for forming a mixture from the lean gas and an air inflow, the Venturi mixer (8) being connected to a lean gas line (10) that conducts the lean gas and to an air inflow line (9) that conducts the air inflow, and comprising a gas engine (1), wherein the Venturi mixer (8) is connected to an inlet (1a) of the gas engine (1) by a mixture line (5), **characterized in that** the gas engine arrangement is operated with a lean gas with a methane content of less than 20% by volume and **in that** a preheating device (4) for preheating the mixture to a temperature (ϑ₁) between 120 °C and 150 °C is arranged in the mixture line (5).

11. The gas engine arrangement according to claim 10, **characterized in that** a heating device (12) for preheating the air inflow is arranged in the air inflow line (9).

12. The gas engine arrangement according to claim 11, **characterized in that** the heating device (12) is an electric heating register.

13. The gas engine arrangement according to claim 11, **characterized in that** the heating device (12) is a heat-exchange device (12, 13, 14, 15) that interacts with an exhaust gas flow (6) leaving the gas engine (1).

14. The gas engine arrangement according to one of claims 10 to 13, **characterized in that** the lean gas line (10) is connected to the mixture line (5) by a delivery line (16) for the direct injection of lean gas into the mixture.

15. The gas engine arrangement according to one of claims 10 to 14, **characterized in that** a compressor (4) of an exhaust gas turbocharger (3, 4) is arranged in the mixture line (5).

16. The gas engine arrangement according to claims 14 and 15, **characterized in that** the delivery line (16) is connected to the mixture line (5) upstream of the compressor (4).

17. The gas engine arrangement according to claim 15 or 16, **characterized in that** the preheating device comprises the compressor (4).

18. The gas engine arrangement according to one of claims 10 to 17, **characterized in that** a throttle member (19) is arranged in the air inflow line (9).

## Revendications

1. Procédé de fonctionnement d'un moteur à gaz (1) à l'aide d'un gaz pauvre, le gaz pauvre étant mélangé avec un flux d'air entrant dans au moins un mélangeur Venturi (8), sous création d'un mélange, et le mélange étant alimenté vers le moteur à gaz (1) en tant que carburant, **caractérisé en ce que** le gaz pauvre contient moins de 20 % en volume de méthane et **en ce qu'**avant son entrée dans le moteur à gaz (1), le mélange est préchauffé à une température (ϑ1) comprise entre 120 °C et 150 °C.

2. Procédé selon la revendication 1, **caractérisé en ce qu'**avant son entrée dans le mélangeur Venturi (8), le flux d'air entrant est préchauffé.

3. Procédé selon la revendication 2, **caractérisé en ce que** lors de son entrée dans le mélangeur Venturi (8), le flux d'air entrant est à une température (ϑ2) de 35 °C à 50 °C.

4. Procédé selon la revendication 2 ou 3, **caractérisé en ce que** le flux d'air entrant est préchauffé à l'aide d'un registre de préchauffage électrique.

5. Procédé selon l'une quelconque des revendications 1 à 4, **caractérisé en ce que** le flux d'air entrant est préchauffé par échange thermique avec un flux de gaz d'échappement du moteur à gaz (1).

6. Procédé selon l'une quelconque des revendications 1 à 5, **caractérisé en ce que** le mélangeur Venturi (8) est conçu sous la forme d'un mélangeur tandem.

7. Procédé selon l'une quelconque des revendications 1 à 6, **caractérisé en ce qu'**à l'intérieur du mélange est vaporisée une fraction du gaz pauvre.

8. Procédé selon la revendication 7, **caractérisé en ce que** le mélange est précomprimé dans un compresseur (4) d'un turbocompresseur (3, 4) et **en ce que** l'injection a lieu avant l'entrée dans le compresseur (4).

9. Procédé selon l'une quelconque des revendications 1 à 8, **caractérisé en ce que** le flux d'air entrant est limité, notamment commandé par un élément d'étranglement (19).

10. Ensemble de moteur à gaz, que l'on fait fonctionner d'après le procédé selon l'une quelconque des revendications 1 à 9 à l'aide d'un gaz pauvre, doté d'un mélangeur Venturi (8), notamment d'un mélangeur tandem, destiné à créer un mélange à partir du gaz pauvre et d'un flux d'air entrant, lequel est raccordé sur un conduit (10) de gaz pauvre menant le gaz pauvre et sur un conduit (9) d'air entrant menant le flux d'air entrant, et doté d'un moteur à gaz (1), le mélangeur Venturi (8) étant raccordé par un conduit (5) de mélange sur une entrée (1a) du moteur à gaz (1), **caractérisé en ce que** l'ensemble de moteur à gaz fonctionne avec un gaz pauvre contenant une fraction de méthane inférieure à 20 % en volume et **en ce que** dans le conduit (5) à mélange est placé un système de préchauffage (4), destiné à préchauffer le mélange à une température (δ1) comprise entre 120 °C et 150 °C.

11. Ensemble de moteur à gaz selon la revendication 10, **caractérisé en ce que** dans le conduit (9) d'air entrant est placé un système de chauffage (12), destiné à préchauffer le flux d'air entrant.

12. Ensemble de moteur à gaz selon la revendication 11, **caractérisé en ce que** le système de chauffage (12) est un registre de chauffage électrique.

13. Ensemble de moteur à gaz selon la revendication 11, **caractérisé en ce que** le système de chauffage (12) est un système échangeur thermique (12, 13, 14, 15) interagissant avec un flux de gaz d'échappement (6) quittant le moteur à gaz (1).

14. Ensemble de moteur à gaz selon l'une quelconque des revendications 10 à 13, **caractérisé en ce que** le conduit (10) de gaz pauvre est relié avec le conduit (5) de mélange par un conduit (16) de convoyage, pour l'injection directe de gaz pauvre dans le mélange.

15. Ensemble de moteur à gaz selon l'une quelconque des revendications 10 à 14, **caractérisé en ce que** dans le conduit (5) de mélange est placé un compresseur (4) d'un turbocompresseur (3, 4).

16. Ensemble de moteur à gaz selon la revendication 14 et 15, **caractérisé en ce que** le conduit (16) de convoyage est relié en amont du compresseur (4) avec le conduit (5) de mélange.

17. Ensemble de moteur à gaz selon la revendication 15 ou 16, **caractérisé en ce que** le système de préchauffage comprend le compresseur (4).

18. Ensemble de moteur à gaz selon l'une quelconque des revendications 10 à 17, **caractérisé en ce que** dans le conduit (9) d'air entrant est placé un élément d'étranglement (19).
